# EUROPEAN PATENT APPLICATION

(11) **EP 1 316 694 A1**
(43) Date of publication of application: **04.06.2003**
(21) Application number: 01000682.3
(22) Date of filing: 30.11.2001
(51) Int. Cl.: F01N 11/00, B60K 6/04

(54) **A method and arrangement for maintaining an exhaust gas catalyst in an effective state**

(71) Applicant: Ford Global Technologies, Inc., Dearborn, Michigan 48126 (US)
(72) Inventor: Lennevi, Jerker, 44351, Lerum (SE)
(74) Representative: Messulam, Alec Moses

(57) **Abstract**

A method for maintaining a catalyst 702 of an emissions system 700 in a hybrid electric vehicle 10 in an operative condition is disclosed.

The method includes sensing that an engine 511 of the hybrid electric vehicle 10 has stopped operating, predicting a time period after which the catalyst 702 will cool to a light-off temperature below which the catalyst 702 becomes ineffective and restarting the engine 511 when the predicted time period has expired thereby reheating the catalyst 702 above the light-off temperature.

## Description

The present invention relates to exhaust gas catalysts and in particular to an exhaust gas catalyst for hybrid electric vehicles.

Generally, a hybrid electric vehicle combines electric propulsion with traditional internal combustion engine propulsion to achieve enhanced fuel economy and/or lower exhaust emissions.

Electric propulsion has typically been generated through the use of batteries and electric motors. Such an electric propulsion system provides the desirable characteristics of high torque at low speeds, high efficiency, and the opportunity to recapture otherwise lost braking energy.

Propulsion from an internal combustion engine provides high energy density, and enjoys an existing infrastructure and lower costs due to economies of scale.

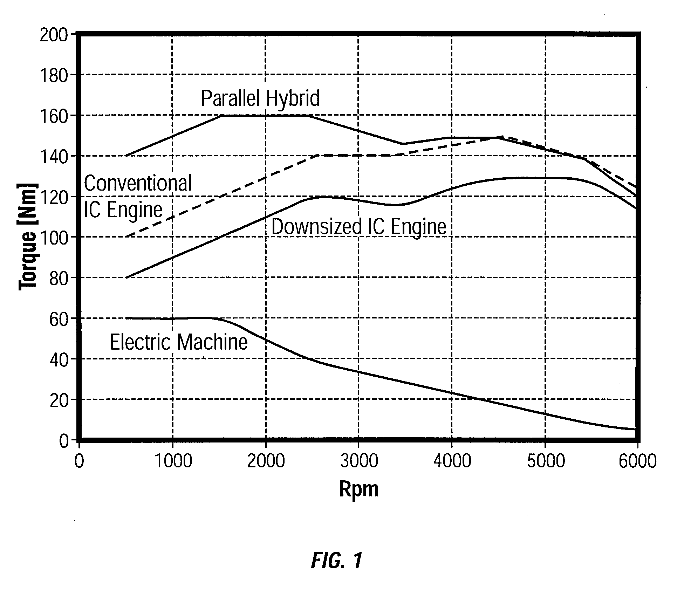

By combining the two propulsive systems with a proper control strategy, the result is a reduction in the use of each device in its less efficient range. Furthermore, and as shown in Figure 1 regarding a parallel hybrid configuration, the combination of a downsized engine with an electric propulsion system into a minimal hybrid electric vehicle results in a better utilization of the engine, which improves fuel consumption. Furthermore, the electric motor and battery can compensate for reduction in the engine size.

In typical configurations, the combination of the two types of propulsion systems (internal combustion and electric) is usually characterized as either series or parallel hybrid systems. In a pure series hybrid propulsion system, only the electric motor(s) are in direct connection with the drive train and the engine is used to generate electricity which is fed to the electric motor(s). The advantage of this type of system is that the engine can be controlled independently of driving conditions and can therefore be consistently run in its optimum efficiency and low emission ranges. A key disadvantage to the series arrangement is the loss in energy experienced because of the inefficiencies associated with full conversion of the engine output to electricity.

In a pure parallel hybrid propulsion system, both the engine and the electric motor(s) are directly connected to the drive train and either one may independently drive the vehicle. Because there is a direct mechanical connection between the engine and the drive train in a parallel hybrid propulsion system, less energy is lost through conversion to electricity compared to a series hybrid propulsion system. The operating point for the engine, however, can not always be chosen with full freedom.

The two hybrid propulsion systems can be combined into either a switching hybrid propulsion system or a power-split hybrid propulsion system. A switching hybrid propulsion system typically includes an engine, a generator, a motor and a clutch. The engine is typically connected to the generator. The generator is connected through a clutch to the drive train. The motor is connected to the drive train between the clutch and the drive train. The clutch can be operated to allow series or parallel hybrid propulsion.

A power-split hybrid system includes an engine, a generator and a motor. The engine output is "split" by a planetary gear set into a series path from the engine to the generator and a parallel path from the engine directly to the power train. In a power-split hybrid system, the engine speed can be controlled by varying the power split to the generator by way of the series path, while maintaining the mechanical connection between the engine and drive train through the parallel path. The motor augments the engine on the parallel path in a similar manner as a traction motor in a pure parallel hybrid propulsion system, and provides an opportunity to use energy directly through the series path, thereby reducing the losses associated with converting the electrical energy into, and out of chemical energy at the battery.

In a typical power-split hybrid system, the generator is usually connected to the sun gear of the planetary gear set. The engine is connected to the planetary carrier and the output gears (usually including an output shaft and gears for interconnection with the motor and the wheel-powering, final drive train) are connected to the ring gear. In such a configuration, the power-split hybrid system can generally be operated in four different modes; one electric mode and three hybrid modes.

In the electric mode, the power-split hybrid system propels the vehicle utilizing only stored electrical energy and the engine is turned off. The tractive torque is supplied from the motor, the generator, or a combination of both. This is the preferred mode when the desired power is low enough that it can be produced more efficiently by the electrical system than by the engine and when the battery is sufficiently charged. This is also a preferred mode for reverse driving because the engine cannot provide reverse torque to the power train in this configuration.

In the parallel hybrid mode, the engine is operating and the generator is locked. By doing this, a fixed relationship between the speed of the engine and the vehicle speed is established. The motor operates as either a motor to provide tractive torque to supplement the engine's power, or can be operated to produce electricity as a generator. This is a preferred mode whenever the required power demand requires engine operation and the required driving power is approximately equal to an optimized operating condition of the engine. This mode is especially suitable for cruising speeds exclusively maintainable by the small internal combustion engine fitted to the hybrid electric vehicle.

In a positive split hybrid mode, the engine is on and its power is split between a direct mechanical path to the drive train and an electrical path through the generator. The engine speed in this mode is typically higher than the engine speed in the parallel mode, thus deriving higher engine power. The electrical energy produced by the generator can flow to the battery for storage or to the motor for immediate utilization. In the positive split mode, the motor can be operated as either a motor to provide tractive torque to supplement the engine's power or to produce electricity to supplement the generator. This is the preferred mode whenever high engine power is required for tractive powering of the vehicle, such as when high magnitude acceleration is called for, as in passing or uphill ascents. This is also a preferred mode when the battery is charging.

In a negative split hybrid mode, the engine is in operation and the generator is being used as a motor against the engine to reduce its speed. Consequently, engine speed and therefore engine power, are lower than in parallel mode. If needed, the motor can also be operated to provide tractive torque to the drive train or to generate electricity therefrom. This mode is typically never preferred due to increased losses at the generator and planetary gear system, but will be utilized when engine power is required to be decreased below that which would otherwise be produced in parallel mode. This situation will typically be brought about because the battery is in a well charged condition and/or there is low tractive power demand. In this regard, whether operating as a generator or motor, the toque output of the generator is always of the same sense (+/-); that is, having a torque that is always directionally opposed to that of the engine. The sign of the speed of the generator, however, alternates between negative and positive values depending upon the direction of rotation of its rotary shaft, which corresponds with generator vs. motor modes. Because power is dependent upon the sense of the speed (torque remains of the same sense), the power will be considered to be positive when the generator is acting as a generator and negative when the generator is acting as a motor.

As can be appreciated, the engine is not always running during vehicle operation. If the engine is stopped for a sufficiently long period during the operation of the vehicle, the exhaust system catalyst may cool down too much and to such a degree that a temporary but significant increase in exhaust emissions will occur upon restart and until the catalyst once again warms to its effective temperature.

It is an object of this invention to provide a hybrid electric vehicle that can be operated in a stop start manner without increased exhaust emissions.

According to a first aspect of the invention there is provided a method for maintaining a catalyst of an exhaust emission system in a hybrid electric vehicle in an operative condition characterised in that the method comprises sensing that an engine of a hybrid electric vehicle has stopped operating, predicting a time period after which the catalyst of the emissions system associated with said engine will cool to a light-off temperature below which said catalyst becomes ineffective and restarting the engine when the predicted time period has expired thereby restoring the catalyst to a temperatures in excess of the light-off temperature.

The time period may be based on known qualities of said catalyst and the ambient conditions in which the vehicle is being operated

The method may further comprise sensing a temperature of said catalyst and initiating stopping of operation of the engine when a predetermined temperature is sensed.

Preferable, after restarting the engine, the engine may be run at idle speed and used to charge one or more batteries of the hybrid electric vehicle.

After re-starting the engine, the catalyst may be heated to a predetermined temperature differential above said light-off temperature and the engine is stopped when the predetermined temperature differential is achieved.

The actual temperature of the catalyst may be sensed and used to initiate the stopping of the engine when the predetermined temperature differential is detected.

In which case, the temperature of said catalyst may be sensed by a temperature sensor located proximate said catalyst.

Alternatively, the temperature of the catalyst is determined by utilising a catalyst modelling process which is dependent upon the catalyst, engine and ambient conditions.

According to a second aspect of the invention there is provided a hybrid electric vehicle having an internal combustion engine an exhaust emission system including at least one exhaust gas catalyst and an electronic controller means to control operation of the engine characterised in that the electronic controller means is operable to sense that the engine has stopped operating, predict a time period after which the catalyst will cool to a light-off temperature below which said catalyst becomes ineffective and restart the engine when the predicted time period has expired thereby restoring the catalyst to a temperature in excess of the light-off temperature.

Preferably, after restarting the engine, the electronic controller means is operable to run the engine at idle speed and use the power produced to charge one or more batteries of the hybrid electric vehicle.

After re-starting the engine the engine may be operated until the catalyst is heated to a predetermined temperature differential above the light-off temperature and the electronic controller means is operable to stop the engine when the predetermined temperature differential is achieved.

The invention will now be described by way of example with reference to the accompanying drawing of which:-
Figure 1 is a graphical comparison of torque generated by a parallel hybrid and systems that have either an engine or motor;
Figure 2 is a perspective of a hybrid electric vehicle showing exemplarily system component locations on the vehicle;
Figure 3 is a schematic depicting the architecture of a power-split hybrid electric vehicle;
Figure 4 is a cross-sectional schematic representation of a planetary gear set;
Figure 5 is a simplified schematic view of a one-way clutch shown in Figure 2;
Figure 6 is a schematic depicting control relationships between the various systems of a hybrid electric vehicle as coordinated utilizing a controller area network;
Figure 7 is a functional schematic depicting the processes, tasks and controls of the various systems of the exemplary hybrid electric vehicle;
Figure 8a is a schematic horizontal cross-sectional view of a compact battery for a hybrid electric vehicle;
Figure 8b is a schematic horizontal cross-sectional view of a traditional battery having cylindrically-shaped cells;
Figure 8c is a schematic vertical cross-sectional view of a battery cooling system forming part of the battery as depicted in Figure 8a.
Figures 9 and 10 schematically illustrate a method for minimizing driver perceptible drive train disturbances during take-off in a hybrid electric vehicle; and
Figures 11 through 15 schematically illustrate a method for maximising the utilisable torque output of a particularly sized engine in a hybrid electric vehicle.

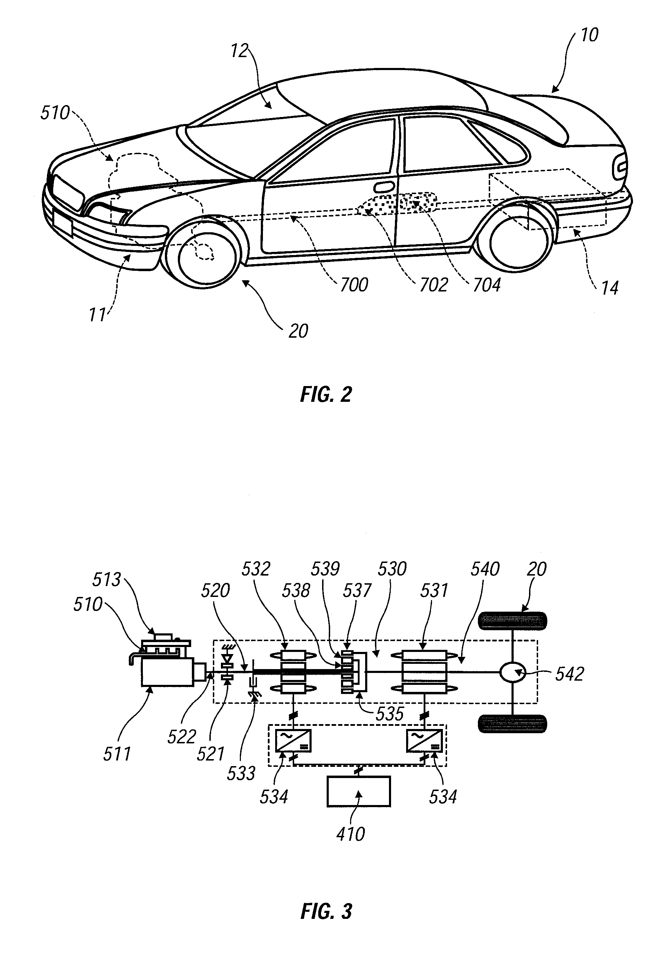

As depicted in Figures 1 and 2, a hybrid electric transporting vehicle 10 has a power train system having components generally designated with reference numbers from the 500's series included therein for providing propulsion, as well as serving supplemental functions which are described in greater detail herein.

Predominantly, the power train system is positioned in an engine room 11 located near a passenger compartment 12 of the vehicle 10. A battery compartment or housing 14, also positioned near the passenger compartment 12 holds one or more batteries 410. As will be appreciated by those skilled in the art, the positioning of both the engine room 11 and battery housing 14 is not limited to the locations set forth in Figure 2. For example, either may be positioned in front of, or behind the passenger compartment 12.

As depicted in Figure 2, the overall systems architecture of the electric hybrid vehicle 10 comprises an engine system 510, including an internal combustion engine 511 that is mechanically connected by an output shaft system 520 to a transaxle system 530.

The transaxle system 530 is further connected to a drive shaft system 540 utilized to rotate one or more drive wheels 20 that propel the hybrid electric transporting vehicle 10. In a preferred embodiment, the combustion engine 511 is controlled by an engine control module (ECM) or unit 220 which is capable of adjusting, among possible parameters, airflow to, fuel flow to and/or ignition at the engine 511. The engine 511 is mechanically connected via an output shaft 522 to the transaxle system 530. A planetary gear set 535 establishes interconnection between the engine 511 (via the output shaft 522), a generator 532, and the drive shaft system 540 (via the transaxle system 530). A motor 531 is also coupled to the drive shaft system 540, also possibly via the transaxle system 530.

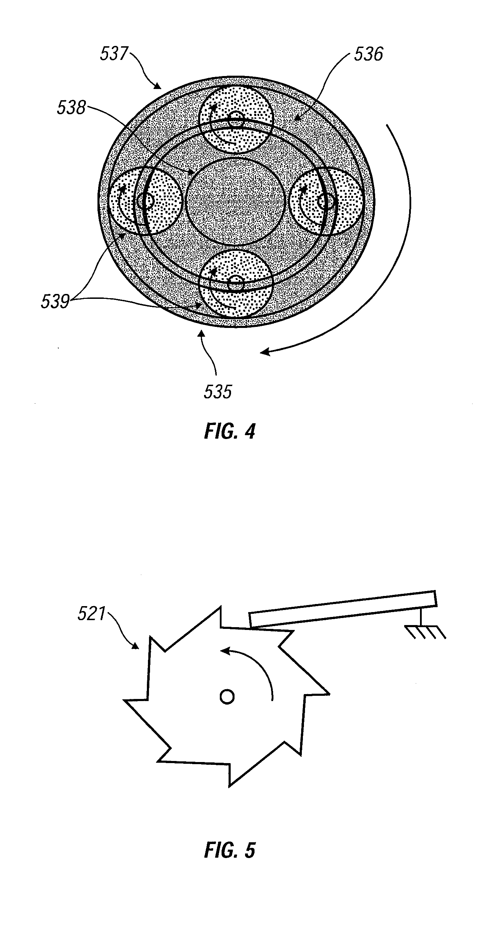

In one embodiment illustrated in Figures 3 and 5, a one way clutch 521 is engageable with the output shaft 522, which in turn is connect to the engine 511 and to the planetary gear set 535. The function of the one-way clutch 521 is to limit the engine to being only a power/torque input to the planetary gear set 535, and with only one direction of rotation. Consequently, the one-way clutch 521 prevents power or torque from being transmitted from the planetary gear set 535 back to the engine 511.

In another aspect, and as shown in Figure 4, the planetary gear set 535 comprises a plurality of concentrically positioned planet gears 539 mechanically engaged between a perimeter region of a centrally located sun gear 538 and an interior surface of a ring gear 537. The individual gears that make up the plurality or set of planet gears 539 are fixed in positions relative to each other by a planetary carrier 536.

The generator 532 is mechanically connected to the sun gear 538 and is configured to convey rotational power and torque to and from the planetary gear set 535. In a preferred embodiment, the generator 532 is capable of being locked to prevent rotation of the sun gear 538 by a generator brake or lock-up device 533. As further contemplated by the present invention, the motor 531 is mechanically connected to the ring gear 537 and is configured to convey rotational power and torque to and from the planetary gear set 535. In a preferred embodiment, and as schematically shown in Figure 3, the drive shaft system 540 is engageable with the motor 531 and effectively terminates at the drive wheel 20, via what can be a conventionally configured transmission/differential arrangement 542.

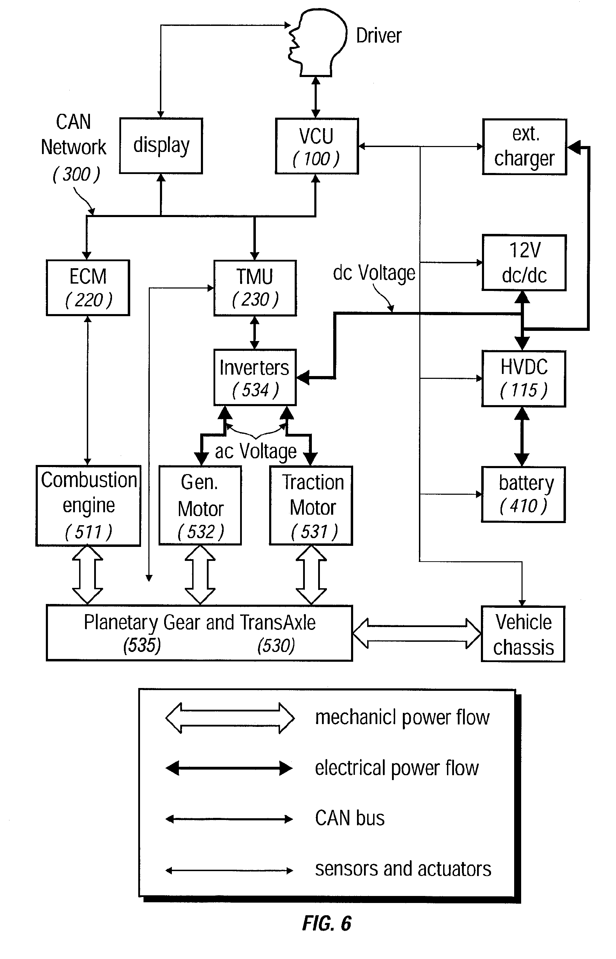

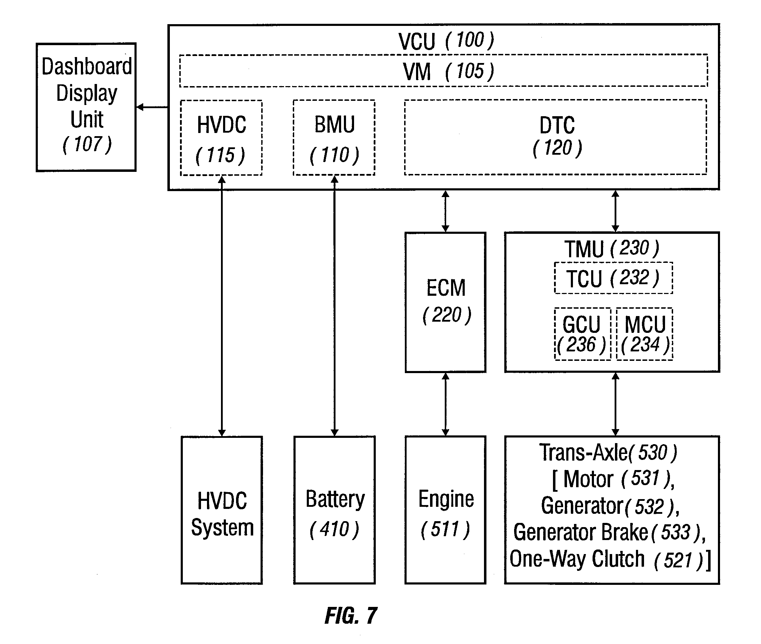

Based on the above disclosed system architecture, implementation of an energy management strategy, which is a focus of the hybrid electric vehicle 10, starts at a high level within a vehicle control unit or vehicle systems controller (VCU)100 as schematically shown in Figures 6 and 7.

The vehicle systems controller 100 is programmed with control strategies for the drive train system and battery system, as well as others such as catalyst temperature control. The vehicle systems controller 100 is responsible for interpreting driver inputs, coordinating the component controllers, and determining vehicle system operating states. The VCU 100 also generates commands to appropriate component sub-systems based on defined vehicle systems controller 100 functions, and sends those commands to the component controllers that, based thereon, take appropriate actions. The vehicle systems controller 100 also acts as a reference signal generator for the sub-system controllers. The vehicle systems controller 100 may take the form of a single, integrated microprocessor, or comprise multiple microprocessors that are suitably interconnected and coordinated.

A primary function of the vehicle systems controller 100 is to carry out vehicle mode processes and tasks known as sequential control processes, make torque determinations, set reference values and perform energy management processes.

Certain systems of the vehicle 10 are managed or monitored by a vehicle management (VM) unit or controller 105 which carries out sequential control processes, including ascertaining the position of the vehicle key and gear selector positioning, among others. It is at this level that certain inputs from the driver and conditions of the vehicle are synthesized for utilization as command inputs for sub-system controllers.

At the lower level of the VCU 100, three sub-component controllers are illustrated in Figure 7. The first is a high voltage DC controller (HVDC) 115, the second is a battery management unit or controller 110 (BMU) and the third is a drive train controller 120 (DTC).

As indicated above, certain inputs and processes are taken from the driver and the vehicle's systems at the vehicle management unit 105. Conversely, certain outputs relevant to the driver will be transmitted and displayed at the dashboard display unit 107 from the VCU 100 or the VM 105.

The HVDC 115 is responsible for coordinating operation of the high voltage components. The positioning of this controller is schematically shown in Figure 6. The HVDC contains contactors or breakers which are normally positioned to an open configuration that prevents electricity from flowing across. But when called on to take action and engage the battery 410, for instance when starting of the engine 511 is required, these contractors (usually a pair) close completing an appropriate connective circuit.

As shown in Figure 6, the HVDC serves as a shield or buffer between the high voltage battery 410, and the inverters 534, as well as other auxiliary loads run off of the electric power of the battery 410. An example of such a high voltage auxiliary load may include an electrically run air-conditioning compressor system. In order to act as such a buffer, the high voltage output from the battery 410 must be relatively slowly "brought-up" to operating levels at the inverter 534 and/or auxiliary loads. In order to accept this "run-up" of the voltage, relatively small capacity contactors are initially closed that cause voltage from the battery to pass to a capacitor in either the inverter 534 or the appropriate auxiliary load, across a resistive circuit (a circuit containing buffering resistors). Once an appropriate pre-charge is built-up in the capacitor, primary contractors are then closed which complete the high voltage circuit between the batteries 410 and the capacitor contained within the receiving component which may be exemplified by the DC to AC inverter(s) 534, or an auxiliary load such as an electric air-conditioning system as indicated hereinabove. In this manner, a potentially damaging high voltage is prevented from being introduced too quickly to the receiving components.

The HVDC 115 also carries out certain diagnostic functions regarding the components of the HVDC 115, such as the contactors within the HVDC 115 itself, and also possibly the several systems interconnected through the HVDC, such as the battery 410, the inverters 534, or an electrically driven air-conditioning compressor which has not been illustrated in the Figures. Among other parameters, these diagnostics may be performed based on measurements of voltage and/or current.

The HVDC 115 also provides interconnection to an exterior charger connection, see Figure 6, thereby allowing the battery 410 to be "plugged-in" for charging from an external power source.

The battery management controller (BMU) 110 handles control tasks relative to the battery system 410. Among other characteristics, the BMU 110 can estimate and measure state-of-charge (SOC) levels, and voltage and current parameters. It can also sense/determine and maintain maximum and minimum voltage and current levels with respect to the battery 410. Based on these determinations or sensed quantities/qualities, the VM 105 , via such control modules as the DTC 120, can direct certain operations for affecting changes in the SOC of the battery 410. Other characteristics which may be monitored include operating temperature(s) of the battery 410, and voltages at the individual battery cells 412. Similarly, pressure within the cells 412 can also be monitored. Failures may be detected and reported, at least back to the VCU; but there is also the possibility of the information being passed to the operator via the dashboard display unit 107.

The DTC 120 makes the mode selection under which the several powering components will cooperate. That includes choices between parallel and split modes, as well as positive and negative split modes. The operational points for the several components of the drive train are also specified by the DTC 120. Still further, reference values are provided by the DTC 120 for the several sub-systems, including the transaxle management control modules or unit (TMU) 230 and the engine control module or unit (ECM) 220. From among the possible settings established by the DTC 120, battery charging/discharging mode is a possibility, as well as specifying whether the generator 532 and/or motor 531 should be used in their powering capacity as a motor, or their generating capacity as a generator. Torque references for the generator and motor are also issued from the TMU 230.

As a sub-component under the TMU 230, the transaxle control unit TCU 232 handles the transaxle 530 with respect to torque compensation when starting and stopping the engine 511. The TCU 232 uses and controls two slave processors
characterized as a generator control unit GCU 236 and a motor control unit MCU 234. The GCU 236 handles the current and torque control of the generator 532; typically, via the inverter 534. The GCU 236 receives its torque and speed reference information from the TCU 232 as its immediate controller. The TCU 232 receives a total torque reference for the transaxle 530 and the speed reference value for the engine 511, together with mode reference information regarding cooperation between the engine 511 and generator 532; such as, whether parallel-, positive-split, or negative-split mode configurations will be assumed. The TCU 232 generates the torque reference parameters for the generator 532 and motor 531, each of which are implemented under the control of the GCU 236 and MCU 234, respectively. The specified torque settings are accomplished by controlling the current provided to the respective generator/motor controllers 236,234.

Based on a map of optimal engine torque vs. speed curves, engine speed and torque are selected by the DTC 120 so that the engine system 510 can deliver the desired engine power and simultaneously lie on one of the engine's optimized efficient curves. If the DTC 120 determines that the speed of the engine 511 is too low for efficient operation, then the engine 511 is turned (or left) off by the engine control unit 220. If the power train control module 120 determines that the speed of the engine 511 is too high to be controlled by the generator 532 (based on SOC and generator limitations), the engine 511 is set to a slowed operational speed by the ECM 220.

Once the speed, torque and power of the engine 511 are determined by the vehicle systems controller 100, particularly at the DTC120 of the controller 100, then the DTC 120 further determines the required speed and torque of the generator 532 to control the engine 511. The DTC 120, using this information, then determines the required speed and torque of the motor 531 to meet the difference, if any, between driver power (torque) demand and the engine power (torque).

Torque determination and monitoring is also carried out at the VCU 100. This function further ensures that torque delivered to the drive wheel(s) 20 is substantially equal to the torque (acceleration) demanded by the driver. The VCU 100 also monitors and controls the torque from the engine 511 and transaxle system 530 by comparing a sensed torque against the torque demanded by the driver. Torque management by the VCU 100 interprets driver inputs and speed control demands to determine regenerative brake torque and desired output shaft torque.

From the VCU 100, commands and references are distributed over a controller area network (CAN) 300 to component controllers generally referenced herein utilizing reference numbers in the 200's series. As indicated above, these controllers include the ECM 220 and the TMU 230 that together control the power train system to achieve efficient energy management, partition torque, determine engine 511 operating point(s), and decide on, and coordinate engine 511 start/stops. Commands and references from the VCU 100 to a series regenerative brake controller determine regeneration torque limitations, desired regenerative torque and zero vehicle speed control.

Finally, if and/or when individual system components are rendered inoperative, such as the motor 531 becomes disabled, the VCU 100 is configured to provide limited operating control over the power train system to allow the hybrid engine vehicle 10 to "limp" home.

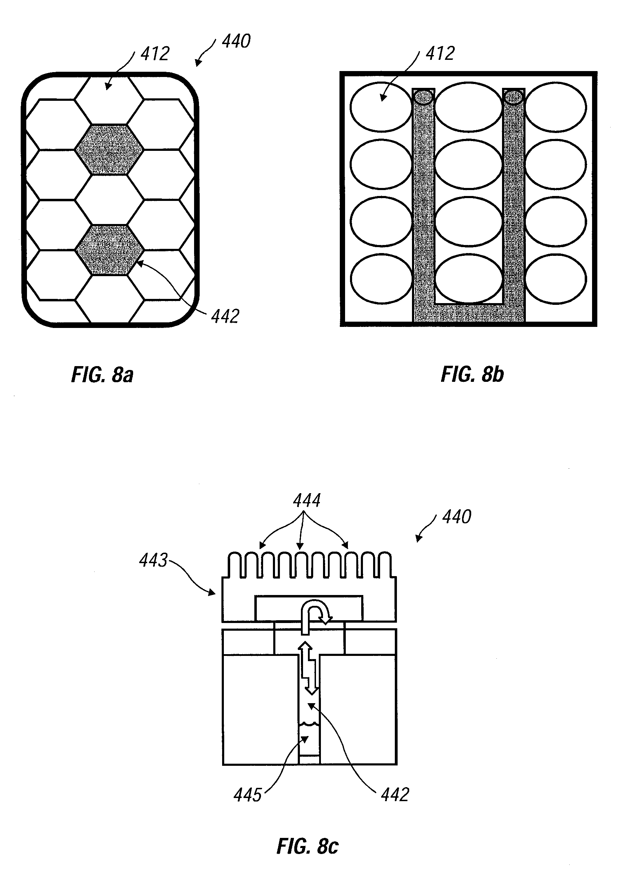

The hybrid vehicle includes several novel features in addition to the invention which is the subject of this invention. For example, as shown in Figure 8a, a compact battery system 400 is made up of a number of elongate battery cells 412, each cell 412 having a longitudinal axis and a hexagonal cross-section shape in a plane oriented substantially perpendicular to the longitudinal axis the plurality of cells 412 are arranged in a honeycomb configuration with opposed faces of adjacent cells 412 proximately located one to the other in face-to-face relationship. One or more hexagonally shaped cooling channels 442 are located at an interior location(s) amongst the plurality of battery cells 412.

A thermally radiating cap 443 is in fluid communication with one or more of the cooling channels 442 which is filled with a cooling fluid 445 that circulates between the cap 443 and the channels 442 to cool the battery cells 412.

To further promote cooling, the radiating cap 443 may be configured with a plurality of fin-type members 444 that extend from an exteriorly exposed surface thereof for enhancing thermal discharge of heat from the cap 443 to air circulated across the fins 444.

Such a battery is more compact than the conventional battery shown in Fig 8b.

The vehicle includes a method for maximising the engine's 511 power contribution to the hybrid electric vehicle's 10 performance in a take-off operating condition.

The method initiates take-off acceleration of the vehicle 10 exclusively using the motor 531, predicts the future demand for an engine's 511 power contribution to the vehicle's 10 immediate future power demand during the take-off acceleration, and starting the engine 511 at the time that the determination is made of future demand for the engine's 511 power contribution during the take-off acceleration.

The present invention provides a process or method for maintaining a catalyst 702 of an emissions system 700 in a hybrid electric propulsive system in an operative state. The method calls for sensing that the engine 511 has stopped operating. A time period is then predicted after which the catalyst 702 will cool down below a temperature (also known as a light-off temperature) at which the catalyst becomes ineffective. Pursuant thereto, the engine 511 is restarted when the time period has expired or lapsed, thereby maintaining the catalyst 702 at temperatures in excess of the light-off temperature, regardless of whether power is need from the engine 511 at that time. Predicting the time period after which the catalyst 702 will cool down takes into consideration known qualities of the catalyst 702 and ambient conditions in which the hybrid electric vehicle 10 is being operated. Such known qualities of the catalyst 702 include, but are not limited to, heating and cooling characteristics of the catalyst 702, life expectancy of the catalyst 702, and age of the catalyst 702. Relevant ambient conditions in which the vehicle 10 is being operated include, but are not limited to, weather and environmental conditions such as temperature, humidity and contaminant loads, as well as traffic conditions and road conditions. As an example, if driving is occurring in hilly terrain, this can be sensed as a cyclical demand for engine power for recurring uphill climbs. If this is quantified, it may be considered in the control parameter as a predictable occurrence. Additionally, the system may take into account sensed or "learned" driver habits or performance for predicting purposes which can include the a particular driver's demand for power is cyclical or otherwise patterned. This may be typified by some drivers' bad habit of repeatedly accelerating to a speed, and then subsequently slowing therefrom. When the decrease in speed is realized by the driver, rapid acceleration is then demanded for again setting the desired travel speed. If the control system "learns" such a pattern, it may be utilized in the predicting or calculating process for maximum elapse time before the catalyst excessively cools.

This method for maintaining the exhaust catalyst 702 in an operative condition may also include sensing the catalyst's 702 temperature and initiating operation or stopping of the engine 511 when a predetermined temperature is detected. Because of the hybrid's 10 characteristics, the catalyst maintenance process may further include running the engine 511 at idle speed when temperature elevation is required and charging the batteries 410 with the power produced from the idling engine 511.

An alternative aspect to this process calls for heating the catalyst 702 to a predetermined temperature differential above the light-off temperature and then stopping operation of the engine 511 when the predetermined temperature differential is achieved. Engine operation is stopped when the predetermined temperature differential is detected by a temperature sensor 704 monitoring the temperature of the catalyst 702 or is predicted by a catalyst temperature model.

It will be appreciated that this method is achieved by the use of one or more computer programmes and data stored in the various electronic controllers of the hybrid vehicle which in combination form an electronic controller means but in particular the VCU 100 and the ECM 220.

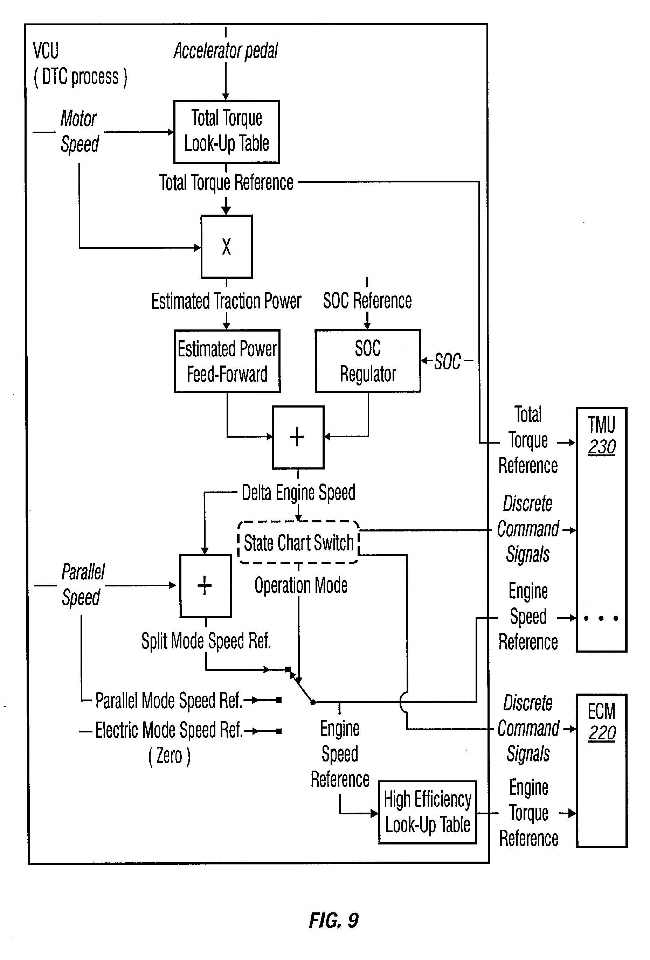

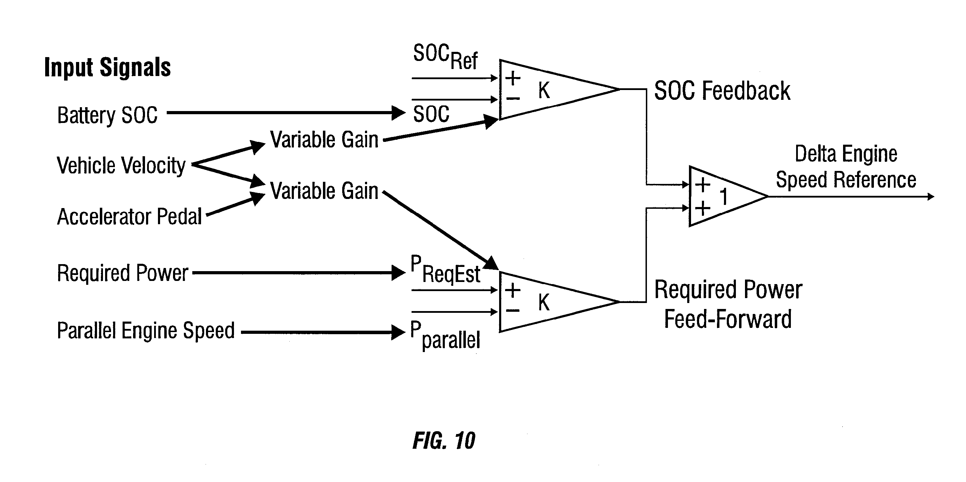

The vehicle also uses a method for minimizing driver perceptible drive train disturbances during take-off driving in a hybrid electric vehicle 10 when maximized power is often desired. The concepts of this method are illustrated in Figures 9 and 10. The method includes sensing an actual state-of-charge (SOC) value of the battery 410 in a hybrid electric vehicle 10 and a velocity of the vehicle 10 during take-off operation. The sensed actual SOC value is compared with a SOC reference value and a delta SOC value is computed as a difference therebetween. A velocity-based SOC calibration factor corresponding to the velocity of the vehicle 10 is obtained from a look- up table maintained in the control system. A combination of the delta SOC value and the SOC calibration factor are utilized as a SOC feedback engine speed control instruction to the engine control unit (ECM) 220 of the hybrid electric vehicle 10.

The vehicle also uses a method for maximising the utilisable torque output capacity of a hybrid electric vehicle 10. The method includes controlling operation of the engine 511 of the hybrid electric vehicle 10 using the generator 532, the engine 511 and generator 532 being interconnected through the planetary gear system 535. The generator 532 has approximately equal torque output capacity as the engine 511 when connecting gear ratios are considered.

The engine controller 220 is utilised for managing the engine 511. This permits the engine 511 to be operated at a torque output level substantially equal to the maximum torque output of the generator 532 without a significant margin of excess control capacity of the generator 532 over the engine 511.

An overpower condition is detected in which the torque output of the engine 511 is surpassing the maximum torque output of the generator 532. Responsively, the engine 511 is controlled to a torque output that is less than the maximum torque output of the generator 532.

The method continues by rechecking for a continuation of the engine overpower condition and shutting the engine 511 down if the control actions are not sufficient and a continuing overpower condition is detected. In this manner, generator and engine over-speed is avoided.

By this process, total utilizable capacity of the hybrid electric vehicle's power plant is optimized by enabling running the engine 511 at substantially maximum capacity where greatest torque is produced therefrom.

Available take-off torque in the hybrid electric vehicle 10 is optimized by running the engine 511 at substantially maximum torque capacity together with a commensurately sized, but not oversized, generator 532 with respect to relative torque capacities. Torque output of the engine 511 and the generator 532 are calculated based on detected operational speeds of the engine 511 and the generator 532, respectively. Speed error may be calculated utilizing one or two sensors.

In a supplemental embodiment of this general control concept, a command is issued to increase the torque output of the generator 532 responsively to detection of an engine 511 over power condition. A check for the continuation of the engine overpower condition is repeated. Then again, a continuing overpower condition may be detected in which the torque output of the engine 511 continues to surpass the torque output of the generator 532 and a supplemental command is issued to again increase the torque output of the generator 532. Again, the check for a continuation of the engine overpower condition is repeated. Ultimately, the engine torque is reduced back to a torque output that is less than the torque output of the generator 532 when repeated checks, of a predetermined number, each detects an overpower condition in which the torque output of the engine 511 surpasses the torque output of the generator 532.

In yet another embodiment of this same basic concept, the method includes detecting an overpower condition in which the torque output of the engine 511 is surpassing the maximum torque output of the generator 532; the engine 511 is responsively controlled to a maximum torque output set at a value less than the maximum torque output of the generator 532.

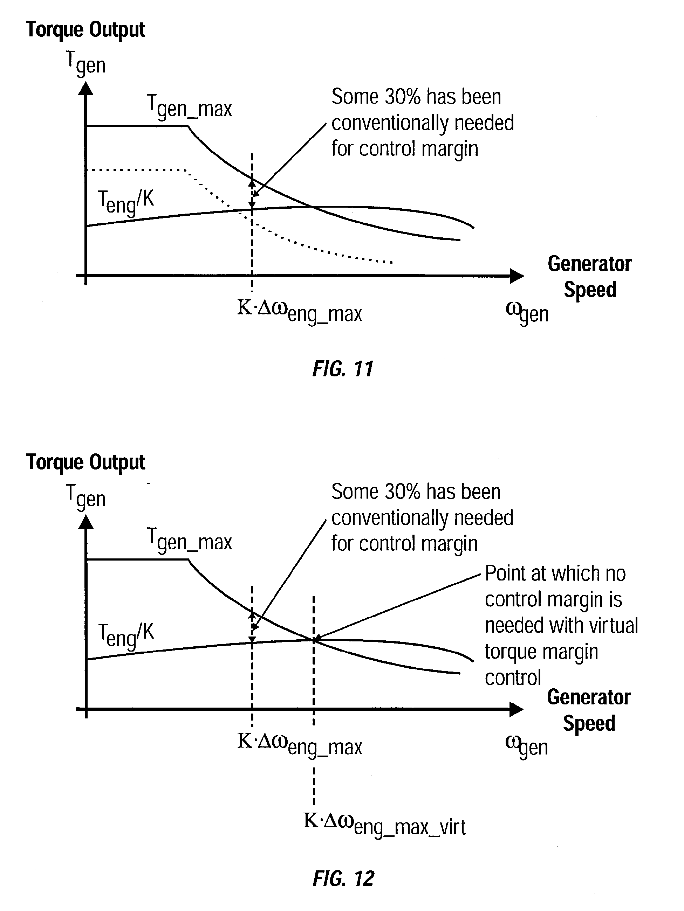

Referring now with greater specificity to the drawings, Figures 11 and 12 comparatively illustrate the method of control which enables the elimination of a thirty percent (30%) "buffer" that has been conventionally provided between the torque capacities of the engine 511 and the generator 532; the necessity of this buffer resulting in the use of generators 532 significantly larger, or engines 511 significantly smaller than would otherwise be optimal since thirty percent of one of their capacities must be sacrificed to maintain the buffer margin for control, just in case it is needed. By otherwise controlling the engine 511 so that it can be assured that the capacity of the torque capacity of the generator 532 will not be exceeded, the approximately thirty percent of lost capacity can be exploited. Graphically this is shown in Figure 12 where the speed (ù), plotted on the x-axis, is equalized at the right side of the graph where the maximum torque of the generator (Tgen_max) is equal to the torque of the engine 511 when the constant (K) representing the gearing ratio is considered (Teng/K). The increase in useable speed, and in turn useable power (P=T ù), from both the engine 511 and generator 532 is represented by the distance moved to the right along the x-axis from the buffered position (K Ä ùeng_max) to the "virtualized" position (K Ä ùeng_max_virt) where the buffer is virtual, and not actual, because of the control strategy exercised.

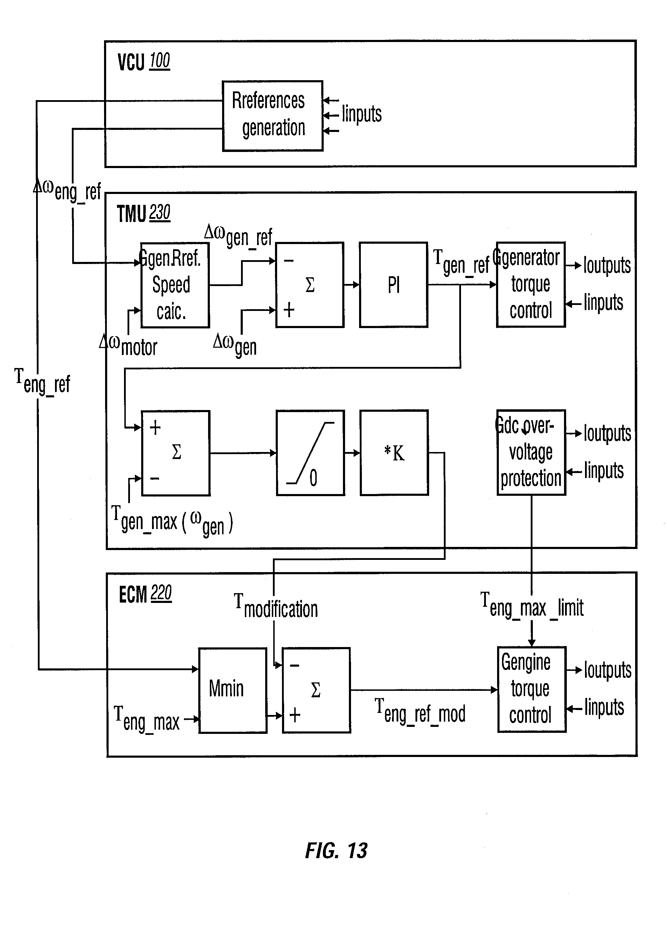

Referring now to Figures 13-15, the VCU 100 calculates an engine reference value (ùeng_ref) and the TMU 230 receives that value and, together with a sensed speed of the motor (ùmotor), taking into account the gearing ratio consequence, a generator reference speed (ugen_ref) is calculated and passed forward for comparison, by summation, with the actual generator speed (ùgen). The result of that comparison is then processed through a proportional integral controller (PI) for, among other things, amplifying the error value and "learning" error patterns that continue over periods of time based on historical values. The learning process is enabled by performing repetitive calculations.

From the PI controller, a generator torque reference (Tgen_ref) is derived. This reference is passed to the generator torque controller 236 for operational control purposes; i.e., by adjusting current, by adjusting voltage with is accomplished using pulse width modulation using transistors in the inverter (see Figure 6). The same reference (Tgen_ref) is further processed by subtracting therefrom the maximum torque capacity of the generator (Tgen_max(ùgen)). The sense, whether positive or negative, of this outcome is then determined; if negative, the maximum torque capacity of the generator has not been exceeded; if positive, the maximum torque capacity of the generator has been exceeded. If positive, the capacity of the generator is being exceeded. This positive value is then multiplied by the constant K to take into account the effect of the gearing ratio and thereby calculating a modification torque (Tmodifictation) .

To the ECM 220, an engine torque reference (Teng_ref) is supplied from the VCM 100. At the ECM 220, the engine torque reference (Teng_ref) is compared to the maximum torque of the engine (Teng_max). The smaller (min) of these two values is further processed by comparison with the modification torque (Tmodifictation) which is subtracted therefrom producing a modified engine torque reference (Teng_ref_mod) .

This reference (Teng_ref_mod) is fed forward to the engine torque controller 220 for operational control purposes over the engine 511 for adjusting airflow to, fuel flow to and/or ignition at the engine 511.

In practice, if the generator 532 has not been determined to be in a condition overpowering the engine 511 at the TMU 230, then the engine torque reference (Teng_ref) from the VCU 100 will be processed through to the engine 511.

If, however, there is a torque modification value (Tmodifictation) from the TMU 230 that is not zero, the engine 511 will be controlled to eliminate the condition in which the engine torque exceeds that of the generator 532.

A primary benefit of the above described arrangement is that a single controller, the TMU 230, provides both the (ùgen_ref) and the (ùgen). This avoids the possibility of introducing errors that are attributable to mis-calibrations that can otherwise occur when multiple controllers are employed for similar purposes. Still further, a maximum engine torque limit (Teng_max_lim) may be derived at the TMU 230 to provide dc over-voltage protection, but which is affected at the engine torque control unit 220.

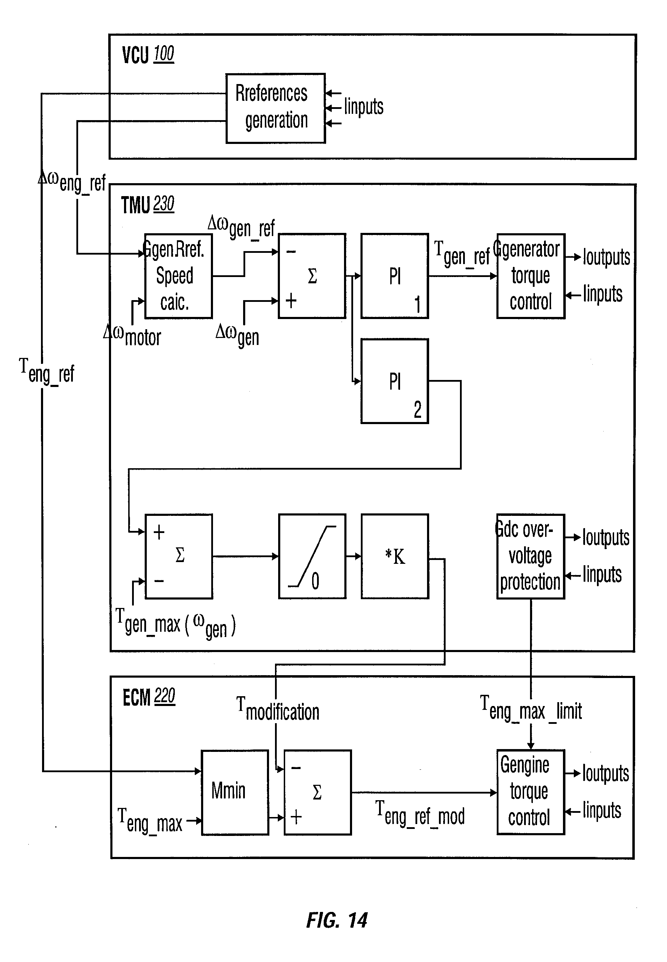

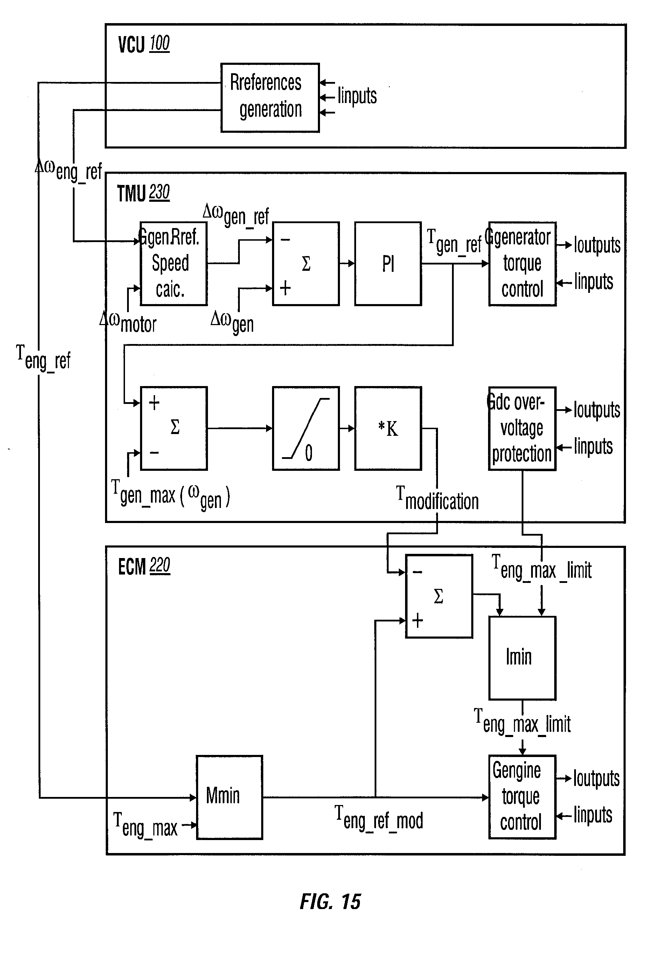

In the embodiment illustrated in Figure 14, two PI controllers are incorporated. In the embodiment of Figure 15, the modified engine torque reference (Teng_ref_mod) and the maximum engine torque limit (Teng_max_lim) are rationalized to produce the maximum engine torque limit (Teng_max_lim) that will be utilized by the engine torque controller 220.

## Claims

1. A method for maintaining a catalyst (702) of an exhaust emission system (700) in a hybrid electric vehicle (10) in an operative condition **characterised in that** the method comprises sensing that an engine (511) of the hybrid electric vehicle (10) has stopped operating, predicting a time period after which a catalyst (702) of the emissions system (700) associated with said engine (511) will cool to a light-off temperature below which said catalyst (702) becomes ineffective and restarting the engine (511) when the predicted time period has expired thereby restoring the catalyst (702) to a temperatures in excess of the light-off temperature.

2. A method as claimed in claim 1 further comprising sensing a temperature of said catalyst (702) and initiating stopping of operation of the engine (511) when a predetermined temperature is sensed.

3. A method as claimed in claims 1 or in claim 2 wherein after restarting the engine (511), the engine (511) is run at idle speed and used to charge one or more batteries (410) of the hybrid electric vehicle (10).

4. A method as claimed in any of claims 1 to 3 wherein after re-starting the engine (10) the catalyst (702) is heated to a predetermined temperature differential above said light-off temperature and the engine (511) is stopped when the predetermined temperature differential is achieved.

5. A method as claimed in claim 4 wherein the actual temperature of the catalyst (702) is sensed and used to initiate the stopping of the engine (511) when the predetermined temperature differential is detected.

6. A method as claimed in claim 5 in which the temperature of said catalyst (702) is sensed by a temperature sensor (704) located proximate said catalyst (702) .

7. A method as claimed in any of claims 1 to 4 wherein the temperature of the catalyst (702) is determined by utilising a catalyst modelling process which is dependent upon the catalyst, engine and ambient conditions.

8. A hybrid electric vehicle (10) having an internal combustion engine (511), an exhaust emission system (700) including at least one exhaust gas catalyst (702) and an electronic controller means (100) to control operation of the engine (511) **characterised in that** the electronic controller means (100) is operable to sense that the engine (511) has stopped operating, predict a time period after which the catalyst (702) will cool to a light-off temperature below which said catalyst (702) becomes ineffective and restart the engine (511) when the predicted time period has expired thereby restoring the catalyst (702) to a temperature in excess of the light-off temperature.

9. A vehicle as claimed in claim 8 wherein after restarting the engine (511) the electronic controller means (100) is operable to run the engine (511) at idle speed and use the power produced to charge one or more batteries (410) of the hybrid electric vehicle (10).

10. A vehicle as claimed in claim 8 or in claim 9 wherein after re-starting the engine (511), the engine (511) is operated until the catalyst (702) is heated to a predetermined temperature differential above the light-off temperature and the electronic controller means (100) is operable to stop the engine (511) when the predetermined temperature differential is achieved.
